# EUROPÄISCHE PATENTSCHRIFT

(11) **EP 2 326 067 B1**
(45) Veröffentlichungstag und Bekanntmachung des Hinweises auf die Patenterteilung: **18.09.2013**
(21) Anmeldenummer: 09014455.1
(22) Anmeldetag: 19.11.2009
(51) Int. Cl.: H04M 1/22

(54) **Leuchtende Hörerauflage für ein Telefon**
Illuminated handset support for a telephone
Support d'un combiné téléphonique illuminé

(43) Veröffentlichungstag der Anmeldung: 25.05.2011
(73) Patentinhaber: FHF Funke + Huster Fernsig GmbH, 45478 Mülheim an der Ruhr (DE)
(72) Erfinder: Römer, Bernhard, 47058 Duisburg (DE)
(74) Vertreter: Nunnenkamp, Jörg

(56) Entgegenhaltungen:
- DE-A1- 3 513 153
- US-A- 2 572 089
- US-A- 2 988 631
- US-A- 3 358 132
- US-B1- 6 711 257

## Beschreibung

Die Erfindung betrifft eine Fernsprecheinrichtung, insbesondere ein Industrie-Telefon, mit wenigstens einem Telefonhörer, ferner mit einem Gehäuse, und mit einer als optische Anzeigeeinheit ausgebildeten Hörerauflage im Gehäuse, welche als Lichtleit-/Streueinheit ausgebildet ist und in die von einem Leuchtmittel emittiertes Licht eingekoppelt wird.

Fernsprecheinrichtungen dienen allgemein als Kommunikationsmittel zur Übermittlung von beispielsweise Tönen und speziell von Sprache mittels elektrischer Signale, Industrie-Telefone zeichnen sich zusätzlich noch durch einen besonders robusten Aufbau aus und eignen sich vorteilhaft zum Einsatz in beispielsweise feuchter oder staubiger Umgebung sowie allgemein unter Industriebedingungen.

Industrie-Telefone, wie sie in der Praxis eingesetzt werden, sind oft mit einem geschlossenen Gehäuse ausgerüstet, welches über eine Tür verfügt, um den im Inneren des Gehäuses befindlichen Telefonhörer zugänglich zu machen. Da ein zur Fernsprecheinrichtung gehöriger Lautsprecher ebenfalls im Inneren des Gehäuses angeordnet ist, um die gesamte Einrichtung vor ungünstigen Umweltbedingungen, beispielsweise in einem Tunnel, innerhalb einer Chemieanlage oder Gleisanlage etc. zu schützen, sind Zusatzmaßnahmen erforderlich, um eingehende Telefonate registrieren zu können. Zu diesem Zweck ist bisher in der Praxis in eine zugehörige und mit der Fernsprecheinrichtung verbundene Rufleitung meistens ein Relais eingeschleift worden, welches bei einem ankommenden Ruf beispielsweise eine externe Lampe oder einen Lautsprecher betätigt. Dadurch kann in der Nähe der Fernsprecheinrichtung befindliches Personal, beispielsweise Wachpersonal, über eingehende Anrufe optisch und/oder akustisch informiert werden. - Diese Maßnahmen sind aufwendig, weil eine externe Lampe bzw. ein externer Lautsprecher erforderlich sind und im Übrigen ein Relais oder ein anderes Schaltelement in die Rufleitung eingeschleift werden muss.

Im Stand der Technik nach der DE 203 08 060 U1 wird bereits eine Fernsprecheinrichtung in Gestalt eines tragbaren Telefons beschrieben. Das tragbare Telefon ist unter anderem mit einer visuellen Anzeige mit Signalmitteln ausgerüstet. Bei diesen Signalmitteln bzw. Leuchtmitteln kann es sich um eine Mehrzahl von Leuchtdioden handeln, die im Gehäuse angeordnet werden. Darüber hinaus wird ein die Leuchtdioden abdeckendes Lichtleitelement angesprochen, Die Leuchtdioden lassen sich im Betriebszustand mittels einer Steuereinheit blinkend ansteuern. Auf diese Weise will man insgesamt die Signalisierung telefonspezifischer Funktionen des Telefons verbessern.

Der weitere gattungsbildende Stand der Technik nach der DE 86 06 944 U1 befasst sich mit einem Autofunktelefon, welches im Telefonhörer mit einer Lichtquelle ausgerüstet ist. Dadurch kann der Zustand einer Alarmanlage von außen erkannt werden.

Zum weiteren einschlägigen Stand der Technik gehört ein Telefon, wie es in der DE 87 15 481 U1 beschrieben wird. Dieses verfügt über ein Gehäuse aus einem transparenten Material. In einer Aussparung des Gehäuses ist ein Lichtstab vorgesehen. Sobald ein interner Telefonanruf ankommt, aktiviert und deaktiviert das erzeugte Pulsieren zugehörige Lampen, um somit ein Blinklicht zu erzeugen.

Die gattungsbildende US 6,711,257 B1 befasst sich mit einem Telefon, bei welchem in einen Hörer ein Indikator eingelassen ist. Hierbei kann es sich um eine LED in Verbindung mit einem Lichtleiter handeln.

Schlussendlich beschreibt die DE 35 13 153 A1 ein Fernsprechgerät, welches mit einer Glühlampe ausgerüstet ist. Die Glühlampe bestrahlt eine Leuchtstoffplatte, welche nach Abheben eines Bedienhörers den gesamten Hintergrund einer Anzeige beleuchtet.

Der Stand der Technik kann nicht in allen Aspekten überzeugen. So ist bei den bisherigen Industrie-Telefonen nachteilig, dass die optische Signalanzeige gleichsam zusätzlich und aufwendig realisiert werden muss. Sofern darüber hinaus im Stand der Technik Signalanzeigen verwendet werden, fällt auf, dass diese überwiegend bei tragbaren Fernsprecheinrichtungen bzw. tragbaren Telefonen zum Einsatz kommen und demzufolge in den Telefonhörer integriert sind. Außerdem werden Lösungen vorgeschlagen, die auf ein gesamtes beleuchtetes Gehäuse mit gleichsam Lichtleiterfunktion zurückgreifen, welches dementsprechend massiv ist und sich für industrielle Anwendungen praktisch nicht eignet (vgl. DE 87 15 481 U1).

Darüber hinaus verfügen die beschriebenen tragbaren Telefone beispielsweise in Tunneln, auf dem Meer etc. über keinen Empfang und sind folglich in vielen Industrieanwendungen ebenfalls keine Alternative für stationäre Telefonanlagen, die über ein Festnetz mit einer Zentrale verbunden sind. Das heißt im Umkehrschluss, dass für solche stationären Telefonanlagen mit geschlossenem Gehäuse die bekannten und bei tragbaren Telefonen eingesetzten Maßnahmen nicht geeignet sind. Hier setzt die Erfindung ein.

Der Erfindung liegt das technische Problem zugrunde, eine derartige Fernsprecheinrichtung, insbesondere ein Industrie-Telefon, der eingangs beschriebenen Ausgestaltung so weiter zu entwickeln, dass eine einwandfreie optische Anzeige unter Berücksichtigung eines besonders kostengünstigen Aufbaus gelingt.

Zur Lösung dieser technischen Problemstellung ist bei einer gattungsgemäßen Fernsprecheinrichtung im Rahmen der Erfindung vorgesehen, dass die Hörerauflage gabelförmig ausgebildet ist und mit zwei beidseitigen Schenkeln den dazwischen angeordneten Telefonhörer umgreift, dass ferner die Hörerauflage als separates und aus einem transparenten Kunststoff hergestelltes Bauteil ausgeführt sowie mit dem Gehäuse verbunden ist, und dass das Leuchtmittel unter Zwischenschaltung eines in das Gehäuse eingesetzten Lichtleiters optisch mit der Hörerauflage gekoppelt ist, wobei sich das Leuchtmittel unterhalb des Lichtleiters befindet, während die Hörerauflage oberhalb des Lichtleiters angeordnet ist und an diesen anschließt. - Die Lichtleit-/Streueinheit fungiert folglich als optische Anzeigeeinheit.

Die Erfindung greift also im Gegensatz zum Stand der Technik ausdrücklich nicht auf eine optische Signaleinheit im Telefonhörer zurück, sondern vielmehr auf eine solche, die im bzw. am Gehäuse angeordnet ist. Außerdem wird lediglich die Hörerauflage im bzw. am Gehäuse als Lichtleit-/Streueinheit ausgelegt und nicht das gesamte Gehäuse. Dadurch kann das Gehäuse grundsätzlich aus einem stabilen Material hergestellt werden, das auch opak gestaltet ist oder sein mag. Etwaige mit der Transparenz verbundene geringe Wandstärken werden also erfindungsgemäß vermieden. Denn lediglich die im Betrieb wenig belastete höhere Auflage im oder am Gehäuse ist als Lichtleit-/Streueinheit ausgebildet.

In diesem Zusammenhang kommt nicht eine grundsätzlich bekannte Lampe zum Einsatz, sondern ist vielmehr die Hörerauflage als Lichtleit-/Streueinheit und folglich optische Anzeigeeinheit ausgebildet. Bei der Hörerauflage handelt es sich beispielsweise um eine Schale zur Aufnahme des Telefonhörers. Die Hörerauflage ist gabelförmig ausgebildet. Der Telefonhörer wird auf diese Gabel aufgelegt bzw. in die Gabel eingehängt. Dabei mag die Gabel zusätzlich mit einem Schalter oder einem Sensor ausgerüstet werden, der den aufgelegten Telefonhörer messtechnisch erfasst.

Im Rahmen der Erfindung wird nun diese an sich bekannte und unverändert genutzte gabelförmige Hörerauflage einem zusätzlichen Nutzen, nämlich als optische Signaleinheit, zugeführt. Zu diesem Zweck ist die Hörerauflage als Lichtleit-/Streueinheit ausgebildet. Das heißt, die Hörerauflage fungiert als Lichtleiteinheit für das von dem Leuchtmittel emittierte und eingekoppelte Licht. Zugleich fungiert die Hörerauflage als Lichtstreueinheit, um das im Inneren meistens total reflektierte Licht nach außen austreten zu lassen respektive im Inneren zu streuen, damit ein besonders eindrucksvoller optischer Effekt erzielt wird. Zu diesem Zweck hat es sich bewährt, wenn beispielsweise im Inneren der Hörerauflage Inhomogenitäten vorgesehen werden. Bei diesen Inhomogenitäten kann es sich beispielsweise um Befestigungskanäle handeln, die ohnehin erforderlich sind, um die Hörerauflage mit dem Gehäuse zu verbinden.

Darüber hinaus kommen weitere und im Inneren vorgesehene Inhomogenitäten in Frage, beispielsweise in Gestalt von in die Hörerauflage eingebrachten Streuteilchen oder Streukörpern. Da es sich bei der Hörerauflage um ein Kunststoffbauteil handelt, lassen sich die fraglichen Streuteilchen unschwer beim Herstellungsprozess (durch Spritzgießen) in die Spritzgussmasse einbringen. Denkbar ist es beispielsweise, mit Glaskügelchen, Metallsplittern, Pulvern, Körnern etc. zu arbeiten, die bewusst ins Innere der Hörerauflage bzw. des an dieser Stelle realisierten Kunststoffbauteils eingebracht werden.

Darüber hinaus verfügt die Hörerauflage an ihrer Oberfläche vorteilhaft über Inhomogenitäten. Hierbei kann es sich um eine bestimmte und von vornherein eingestellte Oberflächenrauigkeit handeln, die beispielsweise durch eine Oberflächenbearbeitung durch Strahlen mit Glasperlen, Sand etc. hergestellt werden mag. Auch zusätzlich eingebrachte Kanten, Rillen, Ritzen etc. fungieren als Inhomogenitäten und sorgen im Kern dafür, dass das ins Innere der Hörerauflage eingekoppelte und von dem Leuchtmittel emittierte Licht gezielt nach außen austreten kann. Das heißt, im Bereich der Inhomogenitäten kommt es im Grenzbereich zwischen der aus einem transparenten Kunststoff (beispielsweise einem Thermoplast) gefertigten Hörerauflage und der Umgebungsluft nicht (mehr) zu einer vollständigen Totalreflexion eines Lichtstrahles, sondern es wird der fragliche Lichtstrahl ganz oder teilweise nach außen gestreut. In Verbindung mit gegebenenfalls im Inneren befindlichen oder eingebrachten Streuteilchen oder zusätzlichen Inhomogenitäten wird so der Hörerauflage eine besonders eindrucksvolle Leuchtkraft verliehen, und zwar ohne dass die Hörerauflage selbst als Leuchtmittel ausgestaltet ist. Denn die Hörerauflage fungiert insofern als Lichtleit-/Streueinheit für das vom Leuchtmittel emittierte und in die Hörer auflage eingekoppelte Licht.

Bei dem Leuchtmittel kann es sich um eine oder mehrere LEDs handeln. Diese können farbig gestaltet sein oder es können auch mehrfarbige LEDs zum Einsatz kommen. Dadurch lassen sich unterschiedliche Funktionszustände der Fernsprecheinrichtung farblich verschieden darstellen. So ist es denkbar, zwischen einkommenden Anrufen unterschiedlicher Teilnehmer farblich zu unterscheiden. Grundsätzlich ist auch der Rückgriff auf Weißlicht-LEDs denkbar und wird selbstverständlich von der Erfindung umfasst. Die Hörerauflage kann einen oder mehrere Hohlräume aufweisen. Diese Hohlräume werden von einer äußeren und üblicherweise transparenten Hülle umschlossen. Die Hörerauflage ist aus einem transparenten Kunststoff hergestellt. Hier hat sich der Rückgriff auf einen transparenten thermoplastischen Kunststoff als besonders günstig erwiesen. Beispielsweise mag Polycarbonat oder auch Polyamid zum Einsatz kommen.

Alternativ hierzu kann die Hörerauflage aber auch massiv ausgebildet werden. Das gilt jedenfalls bis auf etwaige Befestigungskanäle. In diesem Fall ist das Leuchtmittel unabhängig von der Hörerauflage ausgelegt und findet sich außerhalb bzw. unterhalb der Hörerauflage. Dabei wird man regelmäßig die Auslegung so treffen, dass das Leuchtmittel auf einer Leiterplatte angeordnet wird. Eine derartige Leiterplatte ist beispielsweise als Tastaturplatte ohnehin im Inneren des Gehäuses vorhanden. Um nun das vom Leuchtmittel ausgesandte bzw. emittierte Licht in die Hörerauflage einzukoppeln, ist der zusätzliche Lichtleiter zwischengeschaltet. Dieser Lichtleiter sorgt dafür, dass das Leuchtmittel optisch mit der Hörerauflage gekoppelt wird. Dabei hat es sich als günstig erwiesen, wenn der Lichtleiter in das Gehäuse eingesetzt ist. Im Regelfall findet sich der Lichtleiter in einem frontseitigen Gehäusedeckel. Unterhalb dieses Gehäusedeckels ist das Leuchtmittel angeordnet, nämlich in der Regel auf der Leiterplatte bzw. Tastaturplatte. Die Hörerauflage ist oberhalb des Lichtleiters platziert und schließt an diesen an.
Auf diese Weise wird das Leuchtmittel geschützt und im Inneren des Gehäuses unterhalb des Gehäusedeckels platziert. Der in das Gehäuse bzw. den Gehäusedeckel eingelassene bzw. dort angeordnete Lichtleiter sorgt dafür, dass das vom Leuchtmittel emittierte Licht über den Lichtleiter anschließend in die höhere Auflage eingekoppelt wird.

Tatsächlich steht die Hörerauflage vorteilhaft auf dem fraglichen und frontseitigen Gehäusedeckel auf. Zur Befestigung dienen die bereits angesprochenen Befestigungskanäle. Meistens sind zwei Befestigungskanäle vorgesehen, und zwar in beiden beidseitigen Schenkeln der gabelförmigen Hörerauflage. Diese beiden beidseitigen Schenkel finden sich jeweils beidseitig des Telefonhörers, sodass sie in Frontansicht neben dem Telefonhörer platziert sind und aufgrund ihrer exponierten Position bei der beschriebenen und erfolgten Beleuchtung besonders gut registriert werden.

Das gilt insbesondere vor dem Hintergrund, dass das Leuchtmittel und folglich die auf diese Weise beleuchtete Hörerauflage dem Rufsignal entsprechend pulsiert. In die gleiche Richtung zielen Maßnahmen der Erfindung, wonach das Gehäuse grundsätzlich geschlossen und mit einer transparenten Tür ausgebildet ist.

Sowohl das Gehäuse als auch der im Inneren aufgenommene Telefonhörer sind aus einem thermoplastischen Kunststoff gefertigt. Dabei kommt ausdrücklich ein nicht transparenter, also opaker, Kunststoff zum Einsatz. Dadurch lassen sich geringe Fertigungskosten bei nahezu gleicher Stabilität und Festigkeit im Vergleich zu den bisher eingesetzten Duroplasten oder sogar im Vergleich zu Metallgehäusen realisieren. Hinzu kommt die weitere Möglichkeit, die Tür aus dem thermoplastischen Kunststoff problemlos transparent herstellen zu können. Dadurch wird der Blick auf den im Inneren befindlichen Telefonhörer und insbesondere die Hörerauflage unschwer freigegeben. Da die Hörerauflage gabelförmig gestaltet ist und sich beide Schenkel bzw. Gabelschenkel beidseitig des Telefonhörers befinden, wird insbesondere bei beleuchteter Hörerauflage ein besonders starker Kontrast zur Verfügung gestellt. Denn der frontseitige Gehäusedeckel, auf weichem sich die gabelförmige Hörerauflage befindet, ist in der Regel ebenso wie der Telefonhörer dunkel gestaltet. Demgegenüber tritt die durchsichtig bzw. transparent ausgeführte Hörerauflage schon an sich deutlich hervor, Dies gilt erst Recht für den Fall, dass die Hörerauflage im Rhythmus des Rufsignals pulsiert. Dabei wird meistens mit Signalfarben der LEDs gearbeitet, beispielsweise mit einer roten und/oder blauen Farbe der LED.

Um möglichst sämtliches Licht der LED in die Hörerauflage einzukoppeln, ist der an dieser Stelle meistens zwischengeschaltete Lichtleiter mit einer Linsenanordnung an seinem der LED zugewandten Ende ausgerüstet. Diese Linsenanordnung wird im einfachsten Fall so realisiert, dass der Lichtleiter beispielsweise eine konvexe oder konkave Auswölbung aufweist. Jedenfalls lässt sich hierdurch erreichen, dass das üblicherweise unter einem Winkel von ca. 60 ° von der LED emittierte Licht praktisch sämtlich in den Lichtleiter eingekoppelt wird. Der fragliche Lichtleiter ist im Allgemeinen zylindrisch ausgeführt und an seiner Oberfläche glänzend bzw. poliert gestaltet, um das sämtliche eingekoppelte Licht per Totalreflexion im Inneren zu führen und ausgangsseitig des Lichtleiters in die unmittelbar an den Lichtleiter anschließende Hörerauflage einzukoppeln. Dabei wird man den Lichtleiter und die Hörerauflage regelmäßig materialidentisch aus jeweils einem transparenten Thermoplast auslegen. Auf diese Weise sind optische Verluste beim Übergang vom Lichtleiter zur Hörerauflage nicht zu befürchten, Zumindest ist eine Anpassung des jeweiligen Brechungsindizes von einerseits dem Lichtleiter und andererseits der Hörerauflage besonders vorteilhaft.

Diese sämtlichen Maßnahmen lassen sich besonders kostengünstig realisieren, weil als Leuchtmittel auf LEDs zurückgegriffen wird. Diese benötigen keine spezielle Kühlung und sind besonders energieeffizient. Das heißt, die ohnehin für den Betrieb der Fernsprecheinrichtung zur Verfügung stehende elektrische Energie reicht regelmäßig problemlos aus, um die LEDs bzw. das entsprechend aufgebaute Leuchtmittel zu versorgen. Hinzu kommt, dass das von der LED bzw. dem Leuchtmittel emittierte Licht in einen großflächigen und im Vergleich zur LED voluminösen Körper eingekoppelt wird, nämlich die Hörerauflage für den Telefonhörer. Dadurch wird das ankommende Rufsignal optisch nicht nur punktuell sichtbar gemacht, sondern indem ein voluminöser Körper, vorliegend die Hörerauflage, zum Leuchten gebracht wird. In diesem Zusammenhang beschränkt sich die einzige Modifikation darauf, die Hörerauflage aus einem transparenten thermoplastischen Kunststoff ganz oder teilweise zu fertigen. Gleiches gilt für die frontseitige Tür des Gehäuses. - Hierin sind die wesentlichen Vorteile zu sehen.

Im Folgenden wird die Erfindung anhand einer lediglich ein Ausführungsbeispiel darstellenden Zeichnung näher erläutert; es zeigen:
- Figur 1: die erfindungsgemäße Fernsprecheinrichtung in einer schematischen Aufsicht und
- Figur 2: einen Schnitt durch den Gegenstand nach Figur 1 im Bereich der Hörerauflage.

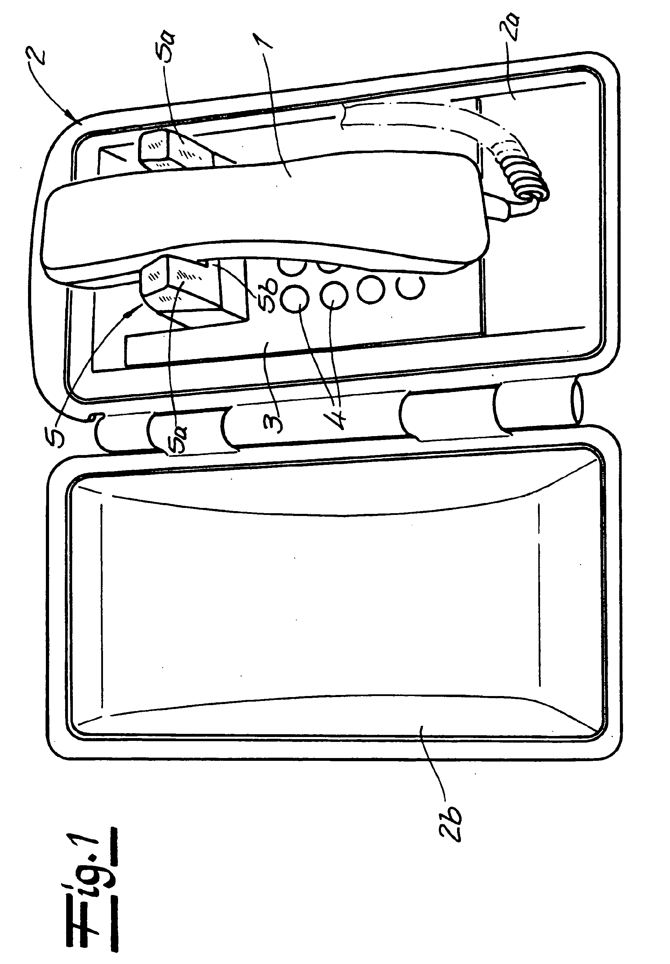

In der Figur 1 ist eine Fernsprecheinrichtung dargestellt, bei welcher es sich nicht einschränkend um ein Industrie-Telefon handelt. Das Industrie-Telefon bzw. die Fernsprecheinrichtung ist stationär ausgelegt und über ein Festleitungsnetz mit anderen Teilnehmern verbunden. Tatsächlich verfügt das Industrie-Telefon über einen Telefonhörer 1 und ein den Telefonhörer 1 in seinem Inneren aufnehmendes und schützendes Gehäuse 2. Im Ausführungsbeispiel und nicht einschränkend ist das Gehäuse 2 insgesamt aus Kunststoff, vorliegend einem thermoplastischen Kunststoff, gefertigt. Das Gehäuse 2 setzt sich aus einer opaken Gehäuseunterschale 2a und einer transparenten Gehäuseoberschale 2b zusammen, die vorliegend als transparente Tür ausgebildet ist. Sowohl die Gehäuseunterschale 2a als auch die Gehäuseoberschale 2b bzw. Tür 2b sind aus einem thermoplastischen Kunststoff, beispielsweise Polycarbonat, hergestellt. Die Gehäuseunterschale 2a verfügt noch über einen frontseitigen Gehäusedeckel 3, welcher mit einer Tastatur 4 und einer Hörerauflage 5 für den Telefonhörer 1 ausgerüstet ist.

Tatsächlich wird das fragliche Gehäuse 2 bzw. die Fernsprecheinrichtung im Ganzen regelmäßig an einer Wand hängend befestigt. Das ist selbstverständlich nicht zwingend, zumal sich die Fernsprecheinrichtung selbstverständlich auch waagerecht auf einem Tisch, einem Absatz etc. platzieren lässt. So oder so wird der Telefonhörer 1 auf die Hörerauflage 5 aufgelegt bzw. bei einem Wandaufbau auf die Hörerauflage 5 aufgehängt.

Zu diesem Zweck ist die Hörerauflage 5 gabelförmig ausgebildet und verfügt über zwei beidseitige Schenkel 5a und einen die beiden Schenkel 5a verbindenden Steg 5b. Man erkennt, dass der Telefonhörer 1 in aufgelegtem Zustand auf die Hörerauflage 5 zwischen den beiden Schenkeln bzw. Gabelschenkeln 5a angeordnet ist und den Steg 5b übergreift, und zwar regelmäßig mit einem im Bereich der Hörkapsel vorhandenen Vorsprung an der Unterseite des Telefonhörers 1. Die Hörerauflage 5 kann noch mit einem Sensor oder Schalter im Steg 5b ausgerüstet sein, um den aufgelegten Telefonhörer 1 zu sensieren. Das ist allerdings nicht zwingend.

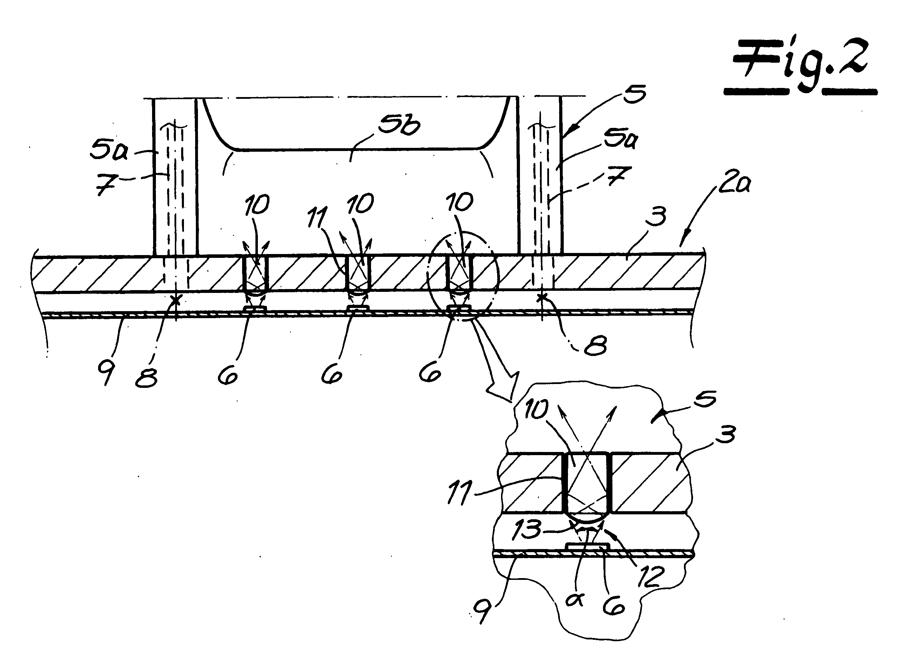

Von erfindungsgemäßer Bedeutung ist nun die Tatsache, dass die Hörerauflage 5 im Gehäuse 2 als Lichtleit-/Streueinheit ausgebildet ist. Das heißt, die Hörerauflage 5 leuchtet nicht selbst, sondern wird durch ein zusätzliches Leuchtmittel 6 zum Leuchten gebracht. Bei dem Leuchtmittel 6 handelt es sich im Rahmen des Ausführungsbeispiels um eine oder mehrere LEDs 6, wie die Figur 2 andeutet. Das von dem Leuchtmittel bzw. der LED 6 emittierte Licht 12 wird in die Hörerauflage 5 eingekoppelt und sorgt dafür, dass bei eingeschalteter LED 6 die Hörerauflage 5 leuchtet.

Zu diesem Zweck ist die Hörerauflage 5 zunächst einmal als von dem eigentlichen Gehäuse 2 separates Bauteil ausgefürt. Tatsächlich handelt es sich bei der Hörerauflage 5 um ein Kunststoffbauteil aus einem spritzgegossenen transparenten thermoplastischen Kunststoff wie beispielsweise Polycarbonat. Dabei mag die Hörerauflage 5 insgesamt massiv oder mit ein oder mehreren Hohlräumen ausgerüstet werden. In diesem Zusammenhang können beide Schenkel bzw. Gabelschenkel 5a mit jeweils Hohlräumen ausgerüstet sein, die aus dem transparenten Kunststoff gefertigt sind bzw. von einer entsprechend ausgelegten äußeren Hülle definiert oder umschlossen werden. In beiden Hohlräumen wird fußseitig des jeweiligen Gabelschenkels 5a eine LED 6 eingesetzt. Anschließend werden die Hohlräume mit einer transparenten Vergussmasse vergossen, die von ihren optischen Eigenschaften her an das Material der umgebenden Hülle angepasst ist. Das ist jedoch nicht dargestellt.

Vielmehr zeigt das Ausführungsbeispiel eine Variante, bei welcher die Hörerauflage 5 bis auf Befestigungskanäle 7 massiv ausgelegt ist. In diese Befestigungskanäle 7 können Befestigungsmittel 8 eingreifen, mit deren Hilfe die Hörerauflage 5 im Beispielfall auf dem frontseitigen Gehäusedeckel 3 befestigt und festgelegt wird. Tatsächlich steht die Hörerauflage 5 bzw. stehen die beiden Schenkel respektive Gabelschenkel 5a senkrecht oder nahezu senkrecht auf dem fraglichen frontseitigen Gehäusedeckel 3 des Gehäuses 2 auf.

Die beiden Befestigungskanäle 7 finden sich in den beidseitigen Schenkeln bzw. Gabelschenkeln 5a der gabelförmigen Hörerauflage 5. Dadurch fungieren die Befestigungskanäle 7 zugleich als Inhomogenitäten im Inneren der Hörerauflage 5. An diesen Inhomogenitäten wird das in die Hörerauflage 5 eingekoppelte und von der LED 6 ausgesandte Licht 12 gestreut. Zusätzlich können Streupartikel in die Hörerauflage 5 bei deren Herstellungsvorgang im Zuge des Spritzgießens eingebracht werden. In die gleiche Richtung zielen Maßnahmen dergestalt, die Oberfläche der Hörerauflage 5 aufzurauen, beispielsweise durch einen Strahlprozess mit Glasperlen, Sand oder dergleichen.

Anhand der Figur 2 erkennt man, dass das Leuchtmittel bzw. die LED 6 auf einer Leiterplatte 9 angeordnet ist. Bei dieser Leiterplatte 9 handelt es sich um eine ohnehin im Inneren des Gehäuses 2 vorhandene und erforderliche Tastaturplatte 9, welche die Tastatur 4 trägt, sowie eventuelle weitere elektronische/elektrische Bauteile. Man erkennt, dass diese sämtlichen Bauteile mit Hilfe der sogenannten SMD-Technologie (Surface Mounted Device) auf die fragliche Leiterplatte bzw. Tastaturplatte 9 aufgebracht worden sind. Das gilt auch für die LED 6, sodass das Leuchtmittel bzw. die LED 6 im Zuge der Herstellung der Leiterplatte bzw. der ohnehin erforderlichen Tastaturplatte 9 in einem Zug mit auf dieser angebracht wird und auch angebracht werden kann.

Die Leiterplatte bzw. Tastaturplatte 9 ist unmittelbar unterhalb des frontseitigen Gehäusedeckels 3 angeordnet. Damit nun das von der LED 6 emittierte Licht 12 in die oberhalb des frontseitigen Gehäusedeckels 3 vorhandene Hörerauflage 5 eingekoppelt werden kann, ist ein zwischengeschalteter Lichtleiter 10 vorgesehen. Dieser Lichtleiter 10 mag beispielsweise zylindrisch gestaltet sein und in eine entsprechende Öffnung 11 im frontseitigen Gehäusedeckel 3 eingesetzt und in dieser gehalten werden. Das von der LED 6 ausgehende Licht 12 beschreibt einen Lichtkegel 12. Dieser Lichtkegel 12 korrespondiert zu einem Öffnungswinkel von α ≈ 60 °.

Damit das sämtliche Licht innerhalb des Lichtkegels 12 in den Lichtleiter 10 eingekoppelt wird, ist der Lichtleiter 10 an seiner dem Leuchtmittel bzw. der LED 6 zugewandten Unterkante mit einer Linsenanordnung 13 ausgerüstet. Hierbei kann auf eine sowohl konkave als auch konvexe Gestaltung der Linsenanordnung 13 zurückgegriffen werden. Außerdem lässt sich die Linsenanordnung 13 unmittelbar in dem Lichtleiter 10 definieren bzw. bei dessen Herstellung berücksichtigen. Denn bei dem Lichtleiter 10 handelt es sich um einen zylindrischen Stab, im Beispielfall ebenfalls aus einem thermoplastischen Kunststoff, welcher im Bereich der Linsenanordnung 13 eine entsprechende Formung erfährt. Jedenfalls wird das von der LED 6 emittierte Licht bzw. der Lichtkegel 12 nahezu vollständig in den Lichtleiter 10 eingekoppelt.

Da der Lichtleiter 10 an seiner Oberfläche poliert ist, erfährt das eingekoppelte Licht 12 im Inneren eine Totalreflexion, wie dies die Figur 2 andeutet. Am der Linsenanordnung 13 gegenüberliegenden Ende des Lichtleiters 10 verlässt das total reflektierte Licht den Lichtleiter 10, ähnlich wie man dies bei Glasfaserkabeln beobachtet. Da an dieser Stelle unmittelbar die Hörerauflage 5 aufliegt bzw. an das kopfseitige Ende des Lichtleiters 10 anschließt, kann das von der LED 6 emittierte Licht 12 unmittelbar und nahezu verlustfrei in die Hörerauflage 5 eintreten. Das gilt besonders vor dem Hintergrund, dass der Lichtleiter 10 und die Hörerauflage 5 von ihren optischen Eigenschaften her (insbesondere mit Blick auf den Brechungsindex) aneinander angepasst sind.

Innerhalb der Hörerauflage 5 sorgen die vorhandenen Inhomogenitäten in Gestalt der Befestigungskanäle 7 sowie gegebenenfalls eingebrachter Streukörper oder auch die Rauigkeit an der Oberfläche der Hörerauflage 5 dafür, dass das in die Hörerauflage 5 eingekoppelte Licht 12 an seiner gesamten Oberfläche praktisch homogen austritt. Dadurch wird der optische Eindruck erzeugt, die Hörerauflage 5 würde über ihr gesamtes Volumen gesehen leuchten.

Da das Gehäuse 2 mit der transparenten Gehäuseoberschale bzw. Tür 2b ausgerüstet ist, lässt sich das Leuchten der Hörerauflage 5 auch von Ferne unschwer registrieren. In diesem Zusammenhang ist die Auslegung so getroffen, dass die LED 6 jeweils im Takte eines ankommenden Rufsignals angesteuert wird und folglich die Hörerauflage 5 dem Rufsignal folgend pulsiert. Durch den weiteren Rückgriff auf farbig emittierende LEDs 6 können jeweils gewünschte Signalfarben für dieses optische Pulsieren gewählt werden. Selbstverständlich ist auch eine verschiedenfarbige Auslegung denkbar. Dann kommt beispielsweise eine Mehrfarben-LED 6 zum Einsatz.

Immer sorgen die beidseitig des Telefonhörers 1 platzierten Schenkel 5a bzw. die Hörerauflage 5 dafür, dass ein einkommender Ruf unschwer optisch erkannt wird. Das geschieht in geschützter Umgebung sowie unter Berücksichtigung einer langlebigen Auslegung.

## Patentansprüche

1. Fernsprecheinrichtung, mit wenigstens einem Telefonhörer (1), ferner mit einem Gehäuse (2), und mit einer als optische Anzeigeeinheit (5) ausgebildeten Hörerauflage (5) im Gehäuse (2), welche als Lichtleit-/Streueinheit ausgebildet ist und in die von einem Leuchtmittel (6) emittiertes Licht (12) eingekoppelt wird,
**dadurch gekennzeichnet, dass**
- die Hörerauflage (5) gabelförmig ausgebildet ist und mit zwei beidseitigen Schenkeln (5a) den dazwischen angeordneten Telefonhörer (1) umgreift, dass ferner
- die Hörerauflage (5) als separates und aus einem transparenten Kunststoff hergestelltes Bauteil ausgeführt, sowie mit dem Gehäuse (2) verbunden ist, und dass
- das Leuchtmittel (6) unter Zwischenschaltung eines in das Gehäuse (2) eingesetzten Lichtleiters (10) optisch mit der Hörerauflage (5) gekoppelt ist, wobei
- sich das Leuchtmittel (6) unterhalb des Lichtleiters (10) befindet, während die Hörerauflage (5) oberhalb des Lichtleiters (10) angeordnet ist und an diesen anschließt.

2. Fernsprecheinrichtung nach Anspruch 1, **dadurch gekennzeichnet, dass** die Hörerauflage (5) auf einem frontseitigen Gehäusedeckel (3) aufsteht.

3. Fernsprecheinrichtung nach Anspruch 1 oder 2, **dadurch gekennzeichnet, dass** die Hörerauflage (5) mit einem oder mehreren Befestigungskanälen (7) ausgerüstet ist, in welche ein oder mehrere Befestigungsmittel (8) eingreifen.

4. Fernsprecheinrichtung nach einem der Ansprüche 1 bis 3, **dadurch gekennzeichnet, dass** die Hörerauflage (5) aus einem transparenten Kunststoff, hergestellt ist.

5. Fernsprecheinrichtung nach einem der Ansprüche 1 bis 4, **dadurch gekennzeichnet, dass** die Hörerauflage (5) bis auf die Befestigungskanäle (7) massiv ausgebildet ist.

6. Fernsprecheinrichtung nach einem der Ansprüche 1 bis 5, **dadurch gekennzeichnet, dass** die Hörerauflage (5) ein oder mehrere von einer äußeren Hülle umschlossene Hohlräume aufweist.

7. Fernsprecheinrichtung nach Anspruch 6, **dadurch gekennzeichnet, dass** der eine oder die mehreren Hohlräume nach gegebenenfalls Einbau des Leuchtmittels (6) mit einer Vergussmasse ausgefüllt werden.

8. Fernsprecheinrichtung nach Anspruch 7, **dadurch gekennzeichnet, dass** die Vergussmasse transparent gestaltet ist und von ihren optischen Eigenschaften her an das Material der sie umgebenden äußeren Hülle angepasst ist.

9. Fernsprecheinrichtung nach einem der Ansprüche 1 bis 8, **dadurch gekennzeichnet, dass** die Hörerauflage (5) an ihrer Oberfläche Inhomogenitäten aufweist, damit das ins Innere eingekoppelte und von dem Leuchtmittel (6) emittierte Licht (12) gezielt nach außen austreten kann.

10. Fernsprecheinrichtung nach einem der Ansprüche 1 bis 9, **dadurch gekennzeichnet, dass** das Leuchtmittel (6) auf einer Leiterplatte (9), im Inneren des Gehäuses (2), angeordnet ist.

11. Fernsprecheinrichtung nach einem der Ansprüche 1 bis 10, **dadurch gekennzeichnet, dass** der Lichtleiter (10) in den frontseitigen Gehäusedeckel (3) eingesetzt ist.

12. Fernsprecheinrichtung nach einem der Ansprüche 1 bis 11, **dadurch gekennzeichnet, dass** das Gehäuse (2) geschlossen sowie mit einer transparenten Tür (2b) ausgebildet ist.

## Claims

1. A telephone apparatus, with at least one telephone receiver (1), further with a housing (2), and with a receiver support (5), which is constructed as an optical display unit (5), in the housing (2), which is constructed as a light-guiding/scattering unit and into which light (12) emitted by a lamp (6) is coupled,
**characterised in that**
- the receiver support (5) is formed in a forked manner and with two legs (5a) on both sides encompasses the telephone receiver (1) arranged therebetween, **in that** further
- the receiver support (5) is realised as a separate component which is produced from a transparent plastic and is also connected to the housing (2), and **in that**
- the lamp (6) is optically coupled to the receiver support (5) with the interposition of an optical waveguide (10) inserted into the housing (2), wherein
- the lamp (6) is located below the optical waveguide (10), whilst the receiver support (5) is arranged above the optical waveguide (10) and connected to the same.

2. The telephone apparatus according to Claim 1, **characterised in that** the receiver support (5) stands on a front housing lid (3).

3. The telephone apparatus according to Claim 1 or 2, **characterised in that** the receiver support (5) is equipped with one or a plurality of fixing channels (7), into which one or a plurality of fixing means (8) engage.

4. The telephone apparatus according to one of Claims 1 to 3, **characterised in that** the receiver support (5) is produced from a transparent plastic.

5. The telephone apparatus according to one of Claims 1 to 4, **characterised in that** the receiver support (5) is constructed solidly as far as the fixing channels (7).

6. The telephone apparatus according to one of Claims 1 to 5, **characterised in that** the receiver support (5) has one or a plurality of cavities encompassed by an outer shell.

7. The telephone apparatus according to Claim 6, **characterised in that** the one or the plurality of cavities are filled with a casting compound after the installation of the lamp (6) if appropriate.

8. The telephone apparatus according to Claim 7, **characterised in that** the casting compound is configured transparently and with regards to the optical properties thereof, is adapted to the material of the outer shell surrounding it.

9. The telephone apparatus according to one of Claims 1 to 8, **characterised in that** the receiver support (5) has inhomogeneities on its surface, so that the light (12) coupled into the interior and emitted by the lamp (6) can escape to the outside in a targeted manner.

10. The telephone apparatus according to one of Claims 1 to 9, **characterised in that** the lamp (6) is arranged on a printed circuit board (9) in the interior of the housing (2).

11. The telephone apparatus according to one of Claims 1 to 10, **characterised in that** the optical waveguide (10) is inserted into the front housing lid (3).

12. The telephone apparatus according to one of Claims 1 to 11, **characterised in that** the housing (2) is closed and also constructed with a transparent door (2b).

## Revendications

1. Installation de téléphonie, avec au moins un combiné téléphonique (1), avec en outre un boîtier (2), et avec un support de combiné (5) réalisé en tant qu'unité d'affichage optique (5) dans le boîtier (2), laquelle est réalisée en tant qu'unité de conduction/diffusion de lumière et dans laquelle de la lumière (12) émise par un moyen d'éclairage (6) est injectée,
**caractérisée en ce que**
- le support de combiné (5) est réalisé en forme de fourchette et enferme, avec deux branches (5a) des deux côtés, le combiné téléphonique (1) situé entre elles, et **en ce que**
- le support de combiné (5) est réalisé en tant qu'élément distinct fabriqué en une matière synthétique transparente, et est relié au boîtier (2), et **en ce que**
- le moyen d'éclairage (6) est couplé optiquement au support de combiné (5) grâce au montage intermédiaire d'un conducteur de lumière (10) placé dans le boîtier (2), moyennant quoi
- le moyen d'éclairage (6) se situe en-dessous du conducteur de lumière (10) alors que le support de combiné (5) est disposé au-dessus du conducteur de lumière (10) et se trouve en jonction avec celui-ci.

2. Installation de téléphonie selon la revendication 1, **caractérisée en ce que** le support de combiné (5) se dresse sur un couvercle de boîtier (3) du côté frontal.

3. Installation de téléphonie selon les revendications 1 ou 2, **caractérisée en ce que** le support de combiné (5) est équipé d'un ou plusieurs canaux de fixation (7) dans lesquels un ou plusieurs moyens de fixation (8) sont en prise.

4. Installation de téléphonie selon l'une des revendications 1 à 3, **caractérisée en ce que** le support de combiné (5) est fabriqué en une matière synthétique transparente.

5. Installation de téléphonie selon l'une des revendications 1 à 4, **caractérisée en ce que** le support de combiné (5) est réalisé de manière massive à l'exception des canaux de fixation (7).

6. Installation de téléphonie selon l'une des revendications 1 à 5, **caractérisée en ce que** le support de combiné (5) présente un ou plusieurs espace(s) creux entouré(s) par une enveloppe extérieure.

7. Installation de téléphonie selon la revendication 6, **caractérisée en ce que** ce ou ces espace(s) creux est/sont rempli(s) d'une masse de coulage après la mise en place du moyen d'éclairage (6) le cas échéant.

8. Installation de téléphonie selon la revendication 7, **caractérisée en ce que** la masse de coulage est réalisée de manière transparente et qu'elle est adaptée de par ses propriétés optiques au matériau de l'enveloppe extérieure qui l'entoure.

9. Installation de téléphonie selon l'une des revendications 1 à 8, **caractérisée en ce que** le support de combiné (5) présenté des irrégularités sur sa surface, afin que la lumière (12) injectée à l'intérieur et émise par le moyen d'éclairage (6) puisse sortir de manière ciblée vers l'extérieur.

10. Installation de téléphonie selon l'une des revendications 1 à 9, **caractérisée en ce que** le moyen d'éclairage (6) est disposé sur une carte de circuit imprimé (9) à l'intérieur du boîtier (2).

11. Installation de téléphonie selon l'une des revendications 1 à 10, **caractérisée en ce que** le conducteur de lumière (10) est inséré dans le couvercle de boîtier (3) du côté frontal.

12. Installation de téléphonie selon l'une des revendications 1 à 11, **caractérisée en ce que** le boîtier (2) est réalisé de manière fermée ainsi qu'avec une porte transparente (2b).
